# EUROPEAN PATENT SPECIFICATION

(11) **EP 3 051 879 B1**
(45) Date of publication and mention of the grant of the patent: **24.04.2024**
(21) Application number: 15153384.1
(22) Date of filing: 30.01.2015
(51) Int. Cl.: H04W 40/20, H04L 45/122, H04L 51/222

(54) **Method for an enhanced routing of data in a telecommunications network based on location information assigned to network nodes of the telecommunications network, and telecommunications network**
Verfahren für ein verbessertes Datenrouting in einem Telekommunikationsnetz auf der Basis von Standortinformationen, die Netzwerkknoten des Telekommunikationsnetzwerks zugeordnet sind und Telekommunikationsnetz
Procédé permettant un routage de données amélioré dans un réseau de télécommunications sur la base d'informations de localisation associées à des noeuds du réseau de télécommunications, et réseau de télécommunications

(43) Date of publication of application: 03.08.2016
(73) Proprietor: Deutsche Telekom AG, 53113 Bonn (DE)
(72) Inventor: Schatzmayr, Rainer, 53229 Bonn (DE)
(74) Representative: Schwöbel, Thilo K.

(56) References cited:
- EP-A2- 0 455 959
- EP-A2- 2 672 674
- US-A1- 2010 002 700
- US-A1- 2013 155 919
- US-A1- 2014 161 041
- US-A1- 2014 258 455
- US-B1- 7 813 326
- MAUVE M ET AL: "A survey on position-based routing in mobile ad hoc networks", IEEE NETWORK, IEEE SERVICE CENTER, NEW YORK, NY, US, vol. 15, no. 6, 1 November 2001 (2001-11-01), pages 30-39, XP011474047, ISSN: 0890-8044, DOI: 10.1109/65.967595

## Description

### BACKGROUND

The present invention relates inter alia to a method for an enhanced routing of data, especially messages, in a telecommunications network based on taking into consideration location information assigned to network nodes within the telecommunications network, as defined in claim 1.

Furthermore, the present invention relates to a telecommunications network for an enhanced routing of data based on taking into consideration location information assigned to network nodes within the telecommunications network, as defined in claim 5.

Additionally, the present invention relates to a network node or a source endpoint network node for conducting an enhanced routing of data based on taking into consideration location information assigned to network nodes within the telecommunications network, as defined in claim 7.

Furthermore, the present invention relates to a program and to a computer program product for an enhanced routing of data in a telecommunications network based on taking into consideration location information assigned to network nodes within the telecommunications network, as respectively defined in claims 8 and 9.

Typically, telecommunications networks or telecommunications systems make use of messaging systems to transmit (or to transfer) information or data or messages from one system endpoint to another system endpoint. Such messages to be transmitted include, e.g.,
-- configuration messages such as used for configuring a network node or a plurality of network nodes or parts of the telecommunications network to handle a specific customer or subscriber of the telecommunications network,
-- alarm messages, e.g. used to inform one network node or one part of the telecommunications network about a failure or an error within the telecommunications network,
-- statistics data, e.g. used to transmit information or data regarding performance aspects of a network node or of a plurality of network nodes or a device within the telecommunications network
-- user generated or requested data (i.e. payload data) to be transmitted by the telecommunications network or between endpoints of the telecommunications network.

Currently used messaging systems used to transmit such data usually do not consider the geographic location (or any location information) of the devices or network nodes or systems involved in the transmission of such messages. The source and the destination of such messages are usually names (i.e. strings or sets characters) that are mapped to Internet Protocol addresses when the transmission of the message is conducted. Thereby, a message that has to be sent from a source (endpoint) network node to a destination (endpoint) network node is usually routed through the telecommunications network based on informing the source (or sending) endpoint network node about the name of the destination endpoint network node and then mapping the name of the endpoint network nodes to Internet Protocol addresses (IP addresses). Such messages are typically exchanged based on Internet Protocol packets (IP packets) that are sent from an Internet Protocol source address to an Internet Protocol destination address via an Internet Protocol network (i.e. a telecommunications network based on using Internet Protocol routing). A typical example is the sending of IP packets based on names (for designating source and destination network nodes) and using DNS (Domain Name System) resolution. Modifying such an Internet Protocol network (such as by adding endpoint network nodes or other network nodes) requires modifying (e.g. adding) names to DNS servers that are mapping, e.g. the newly introduced or added names to the respective IP addresses.

In the context of the present invention, the term "IP address" or "IP addresses" mainly refer to IPv4 (Internet Protocol Version 4) IP addresses and/or to IPv6 (Internet Protocol Version 6).

An alternative solution would consist in a telecommunications network such that all messages are sent to a central distribution point that forwards the messaged to the respective destination endpoint. Transmitting messages in such a manner could be interpreted - especially when considering an implementation involving an Internet Protocol network -as transmitting two (or more) messages, requiring multiple iterations of mapping of names to IP addresses. A typical example of such a messaging system are messaging bus systems. These systems have a set of rules that describe how messages should be forwarded. However, changes to such systems require the definition of new forwarding rules.

Distributed telecommunications networks or telecommunications systems have multiple endpoint network nodes (or endpoints) that require the exchange of messages between participating endpoint network nodes. Messages exchanged between endpoint network nodes do not necessarily follow the shortest geographical location (or network topological path), in turn resulting in longer transmission times of the messages transmitted, leading to a higher load of the telecommunications network and a waste of transmission resources than would otherwise be possible.

Current large scale distributed telecommunications networks or telecommunications systems depend on the configuration of rules mapping generic names to IP addresses, and a pre-configuration of IP addresses to physical locations inside the messaging system or telecommunications network. This makes changes to the telecommunications network or system a time-consuming activity, as:
-- a new endpoint network node introduces a new name that needs to be associated with an IP address,
-- new IP addresses might require additional configuration activities in the telecommunications network to optimize resource usage,
-- new rules might be needed to describe how endpoint network nodes (or names thereof) should be identified and mapped to IP addresses.

As typically such telecommunications networks comprise several thousand network nodes (if not hundreds of thousands of network nodes), keeping all the configurations up to date requires important operational and/or administrative resources.

The following patent documents US 2014/258455 A1, US 2014/161041 A1, US 2013/155919 A1, US 2010/002700 A1, EP 2 672 674 A2, US 7 813 326 B1, EP 0 455 959 A2, generally describe methods for routing packets in a network based on the geographical position of the network nodes.

### SUMMARY

An object of the present invention is to provide a method for an enhanced routing of data in a telecommunications network, avoiding that messages (or generally data) that are exchanged or transmitted between endpoint network nodes do not follow the shortest geographical or network topological path within the telecommunications network, and hence leading - at least in average - to shorter transmission times of the messages transmitted, to a higher capacity of the telecommunications network, and to a reduction of waste of transmission resources within the telecommunications network.

The object of the present invention is achieved by a method for an enhanced routing of data in a telecommunications network based on taking into consideration location information assigned to network nodes within the telecommunications network, the telecommunications network being a distributed telecommunications network and comprising a plurality of intermediate network nodes and a plurality of endpoint network nodes, wherein a location information is assigned to each one of the plurality of intermediate network nodes and to each one of the plurality of endpoint network nodes, wherein in view of either transmitting a message or configuring a transmission path of a message
-- either from a source endpoint network node to a destination endpoint network node of the plurality of endpoint network nodes, involving at least one specific intermediate network node of the plurality of intermediate network nodes,
-- or from the source endpoint network node of the plurality of endpoint network nodes to one specific intermediate network node of the plurality of intermediate network nodes, the method comprises the following steps:
-- in a first step, the specific intermediate network node is determined, by the source endpoint network node, among the plurality of intermediate network nodes, wherein the specific intermediate network node is selected among the plurality of intermediate network nodes taking into consideration the respective location information assigned, respectively, to the plurality of intermediate network nodes, and the respective location information assigned to the source endpoint network node and/or the respective location information assigned to the destination endpoint network node,
-- in a second step, subsequent to the first step, the message is either transmitted or the transmission path configured involving the specific intermediate network node.

According to the present invention it is thereby advantageously possible to provide a method for an exchange (or a transmission) of messages (or data) within the telecommunications network, based on the use of location information (especially geographic coordinates) of (or assigned to) the source network nodes and the destination network nodes, respectively, of the messages. Using location information for taking routing decisions within the telecommunications network provides the advantage that the shortest routing path can be used for transmitting a message, i.e. the location information are used to find the closest destination from a given source network node to a given destination network node. According to the present invention, it is also possible and preferred to use the location information, assigned (or associated) to the different network nodes of the telecommunications network, instead of using names indicating the source and the destination. However, once the destination network node of a given message to be transmitted is defined taking into consideration the location information - especially alongside other parameters taking routing decisions such as delay time indications or the like -, routing of the messages based on IP addresses is preferably performed for transporting the message through the telecommunications network.

According to the present invention, the location information especially comprises geographic coordinates, such as the latitude, the longitude, the elevation (or height), distances to predetermined reference points, angles (to predetermined reference points) or any geographical coordinates.

According to the present invention, it is advantageously possible to reduce the overhead or efforts when updating the telecommunications network, e.g., by introducing new endpoint network nodes and/or intermediate network nodes (such as new source network nodes and destination network nodes). This is because the introduction of such new network nodes (whether it be endpoint network nodes or intermediate network nodes) becomes straightforward according to the present invention:
-- Each network node (especially each endpoint network node) can be named (or is named) according to its location information (especially its geographical location),
-- The determination of the closest (destination) network node from a given (source) network node corresponds to a simple calculation of distances, especially based on the location information, i.e. especially the geographical coordinates of the source network node and the destination network node, i.e. not requiring or being based on any translation or configuration to be performed beforehand.
-- No rules need to be defined for new endpoint network nodes and/or intermediate network nodes.

According to the present invention, it is thereby advantageously possible to simplify the management of the telecommunications network, especially in case the telecommunications network is a large telecommunications network comprising a multitude (often many thousands) of network nodes. Such telecommunications networks are typically constantly modified in one part of the other and often simultaneously in different parts, i.e. involving different network node (whether it be endpoint network nodes or endpoint network nodes). Therefore, the likelihood of a modification increases with the size of the telecommunications network (i.e. typically the number of network nodes of the telecommunications network). As any introduction (or deployment) of a new network node (or server) and/or any modification and/or removal of an existing network node (or server) does only require the distribution or transmission of the name of the network node (or of the server), i.e. the location information assigned to it, to the interested other network nodes, especially the endpoint network nodes, the management of the telecommunications network can be greatly simplified. Adapting or updating the (configuration of the) other network nodes (especially the endpoint network nodes) does not need to be based on a configuration information (obtained specifically by the endpoint network nodes) but can be based on generally distributing location information (e.g. in the form their names) related to the relevant updated network nodes to the endpoint network nodes.

In case that a plurality of endpoint network nodes, e.g. one million of endpoint network node, want to send a message (e.g. of a certain type) to the closest intermediate network node (or closest server) as the destination of the respective messages, for example ten possible destination servers, it is not necessary to distribute to each endpoint network node its closest destination server. According to the present invention, the location information (i.e. especially the geographical coordinates), respectively, of the intermediate network nodes or destination servers (in the example given ten destination servers or intermediate network nodes) is transmitted to each of the million of endpoint network nodes, which in turn allows these endpoint network nodes to determine (or calculate) the closest server (or intermediate network node). Changes applied to the telecommunications network, such as adding and/or removing and/or modifying one of the intermediate network nodes (or destination servers), only requires the transmission of the corresponding location information (i.e. related to the destination servers involved in that change) to the endpoint network nodes, without having to identify which (sending) endpoint network nodes are affected and in which manner.

According to the present invention, the telecommunications network is a distributed telecommunications network and comprises a plurality of intermediate network nodes and a plurality of endpoint network nodes. The endpoint network nodes typically connect a certain number of subscribers of the telecommunications network to the telecommunications network but typically terminate the telecommunications network, i.e. from a point of view of the operator of the telecommunications network, the endpoint network nodes act as interface points to other devices that are not part of the considered telecommunications network. E.g., the endpoint network node can also act as gateway network nodes to other telecommunications networks (such as in a different country). The intermediate network nodes constitute network nodes that are typically used for routing data within the telecommunications network, and especially between the endpoint network nodes. Collectively, the intermediate network nodes could also be called the backbone of the telecommunications network.

According to the present invention, either a message needs to be currently transmitted or a transmission path needs to be configured (typically for subsequently transmitting a certain number of different messages of a certain message type).

According to the present invention, the following two basic situations occur:
-- A message is either to be transmitted (or the transmission path configured) from a given endpoint network node (source endpoint network node) to a given endpoint network node (destination endpoint network node), involving at least one specific intermediate network node of the plurality of intermediate network nodes;
-- Alternatively, a message is to be transmitted (or the transmission path configured) from a given endpoint network node (source endpoint network node) to one specific intermediate network node of the plurality of intermediate network nodes.

In the latter case, the one specific intermediate network node needs to be determined; in the former case, the one specific intermediate network node from which the message should be transmitted (or the transmission path configured) towards the destination endpoint network node needs to be determined.

According to the present invention, in both situations the specific intermediate network node is determined by the source endpoint network node among the plurality of intermediate network nodes. The source endpoint network node determines (or selects) the specific intermediate network node among the plurality of intermediate network nodes taking into consideration the respective location information assigned, respectively, to the plurality of intermediate network nodes, and the respective location information assigned to the source endpoint network node and/or the respective location information assigned to the destination endpoint network node. This means that in the first above mentioned situation, the source endpoint network node determines (or selects) the specific intermediate network node (among the plurality of intermediate network nodes) by taking into consideration the respective location information of the plurality of intermediate network nodes, and the location information of the source and/or destination endpoint network nodes. In the second above mentioned situation, the source endpoint network node determines (or selects) the specific intermediate network node (among the plurality of intermediate network nodes) by taking into consideration the respective location information of the plurality of intermediate network nodes, and the location information of the source endpoint network node.

The specific intermediate network node determined in the first step is the used in the second step for either transmitting the message to the specific intermediate network node (as either an intermediate destination of the message or as the final destination of the message) or for configuring the transmission path of the message.

According to the present invention, it is preferred that the respective location information of one of the plurality of endpoint network nodes and/or of one of the plurality of intermediate network nodes comprises a geographical coordinate information, especially at least one out of the following:
-- a longitude information and/or a latitude information and/or an elevation or height information,
-- geographical coordinates based on predefined reference points and distances thereto,
-- geographical coordinates based on a predefined reference point and a distance information and/or an angle information.

Thereby, it is advantageously possible to assign a location information to preferably each of the network nodes of the telecommunications network that can be used to route and transmit messages in a more effective manner within the telecommunications network.

According to a further preferred embodiment of the present invention, it is preferred that involving the specific intermediate network node in handling the message relates to using the specific intermediate network node for routing and/or transmitting and/or receiving the message.

It is thereby advantageously possible that the specific intermediate network node is either
-- the destination node of the respective message, i.e. the specific intermediate network node is used for receiving the message, or
-- a forwarding node of the respective message, i.e. the specific intermediate network node is used for routing the message, or
-- the source node of the respective message, i.e. the specific intermediate network node is used for transmitting the message.

Furthermore, it is preferred according to the present invention that the specific intermediate network node is determined, by the source endpoint network node, among the plurality of intermediate network nodes such that a calculated distance value - calculated based on using the respective pieces of location information - between the specific intermediate network node on the one hand and the source endpoint network node and/or the destination endpoint network node on the other hand corresponds to a minimum among the plurality of intermediate network nodes.

Thereby, it is advantageously possible, for each of the (source) endpoint network nodes, to define or to detect the closest intermediate network node (i.e. the specific intermediate network node), i.e. the one specific intermediate network node that should be used in routing a message of a specific type or the one specific intermediate network node that should be used when a transmission path of the message needs to be defined.

According to a further embodiment of the present invention, the method comprises a third step, prior to the first step, wherein in the third step, the location information - assigned to the plurality of intermediate network nodes and to the plurality of endpoint network nodes - is transmitted to at least the source endpoint network node.

Still furthermore, it is preferred according to the present invention that the third step is repeated and an updated location information - assigned to the plurality of intermediate network nodes and to the plurality of endpoint network nodes after the telecommunications network has been updated, involving adding and/or removing and/or modifying at least a part of the plurality of intermediate network nodes and/or of at least a part of the plurality of endpoint network nodes - is transmitted to at least the source endpoint network node.

Thereby, it is advantageously possible that the location information can be distributed to the endpoint network nodes prior to determining the specific intermediate network node (for a certain message or for a certain transmission path to configure). It is thereby advantageously possible according to the present invention that the transmission of the (updated) location information (related to at least the different intermediate network nodes, especially after a modification having occurred in the telecommunications network) is performed and afterwards the decision to determine the specific intermediate network node is taken based on the updated version of the location information.

The present invention also relates to a telecommunications network for an enhanced routing of data based on taking into consideration location information assigned to network nodes within the telecommunications network, the telecommunications network being a distributed telecommunications network and comprising a plurality of intermediate network nodes and a plurality of endpoint network nodes, wherein a location information is assigned to each one of the plurality of intermediate network nodes and to each one of the plurality of endpoint network nodes, wherein in view of either transmitting a message or configuring a transmission path of a message
-- either from a source endpoint network node to a destination endpoint network node of the plurality of endpoint network nodes, involving at least one specific intermediate network node of the plurality of intermediate network nodes,
-- or from the source endpoint network node of the plurality of endpoint network nodes to one specific intermediate network node of the plurality of intermediate network nodes, the telecommunications network is configured such that:
   -- the specific intermediate network node is determined, by the source endpoint network node, among the plurality of intermediate network nodes, wherein the specific intermediate network node is selected among the plurality of intermediate network nodes taking into consideration the respective location information assigned, respectively, to the plurality of intermediate network nodes, and the respective location information assigned to the source endpoint network node and/or the respective location information assigned to the destination endpoint network node,
   -- the message is either transmitted or the transmission path configured involving the specific intermediate network node.

According to the present invention it is thereby advantageously possible to reduce the efforts and overhead when network nodes of the telecommunications network are modified: Using location information for taking routing decisions within the telecommunications network provides the advantage that the shortest routing path can be used for transmitting a message.

Additionally, the present invention also relates to a network node or source endpoint network node, adapted to be used in an inventive telecommunications network according to the present invention.

Furthermore, the present invention relates to a program comprising a computer readable program code which, when executed on a computer and/or on a network node of a telecommunications network and/or on a source endpoint network node of a telecommunications network, especially in part on a network node of a telecommunications network and in part on a source endpoint network node of a telecommunications network, causes the computer and/or on the network node of the telecommunications network and/or the source endpoint network node of the telecommunications network to perform the inventive method.

The present invention also relates to computer program product for an enhanced routing of data in a telecommunications network based on taking into consideration location information assigned to network nodes within the telecommunications network, the computer program product comprising a computer program stored on a storage medium, the computer program comprising program code which, when executed on a computer and/or on a network node of a telecommunications network and/or on a source endpoint network node of a telecommunications network, especially in part on a network node of a telecommunications network and in part on a source endpoint network node of a telecommunications network, causes the computer and/or on the network node of the telecommunications network and/or the source endpoint network node of the telecommunications network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

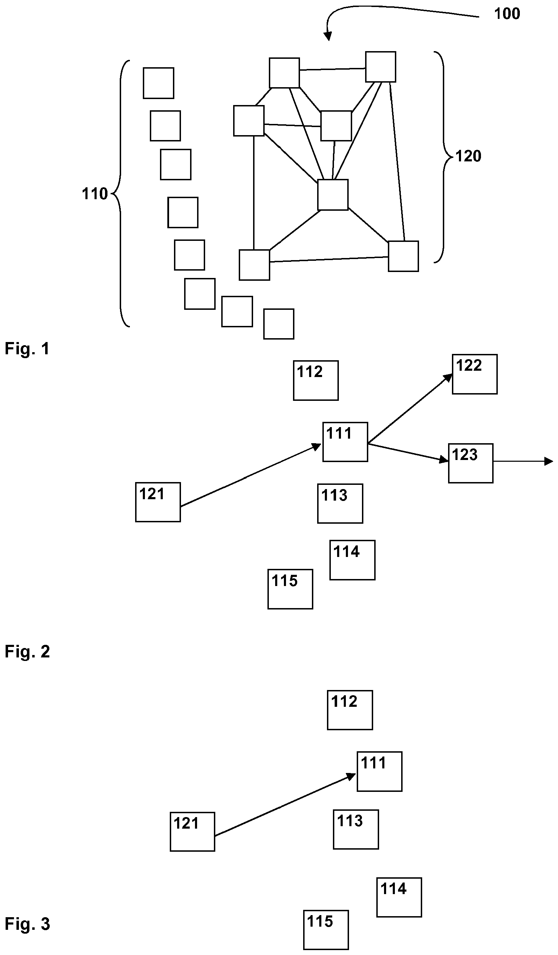

Figure 1 schematically illustrates a telecommunications network comprising a plurality of endpoint network nodes and a plurality of intermediate network nodes, the endpoint network nodes being able to access a plurality of the intermediate network nodes, which one of these intermediate network nodes to be accessed for routing a specific message can be determined by the respective endpoint network node.
Figure 2 schematically illustrates a first situation where a message is to be transmitted (or the transmission path configured) from a given endpoint network node (source endpoint network node) to a given endpoint network node (destination endpoint network node), involving at least one specific intermediate network node of the plurality of intermediate network nodes.
Figure 3 schematically illustrates a second situation where a message is to be transmitted (or the transmission path configured) from a given endpoint network node (source endpoint network node) to one specific intermediate network node of the plurality of intermediate network nodes.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100, comprising a plurality of endpoint network nodes 110 and a plurality of intermediate network nodes 120, is schematically shown. The endpoint network nodes 120 are typically able to access a plurality (if not all) of the intermediate network nodes 110 (i.e. normally all endpoint network nodes 120 are able to access at least a plurality of intermediate network nodes 110. This raises the question which one of the intermediate network nodes 110 to access in case that a certain message needs to be transmitted.

The present invention suggests a mechanism to provide an effective way of determining which one of the intermediate network nodes 110 should be accessed, by the respective endpoint network node (hereinafter also called source endpoint network node) of the plurality of endpoint network nodes 120, for routing a specific message or for configuring a respective transmission path. Such a case corresponds to the situation that an endpoint network node has multiple alternatives, in terms of different possible intermediate servers (or intermediate network nodes 110) to be used for a message to reach a destination within the telecommunications network (or outside of the telecommunications network), and hence to route the message it wants to send. The destination server (or the destination endpoint) might be pre-configured or it might be learned by the endpoint by asking a repository. When the source endpoint network node has multiple alternatives (i.e. alternatives of using (alternatively) a plurality of intermediate network nodes 110), it is able, according to the present invention, to calculate the closest one of the intermediate network nodes 110 (i.e. the closest destination as a next hop of the message) by computing the closest distance between itself (i.e. the source endpoint network node) and all intermediate network nodes 110 available to the source endpoint network node.

Within the telecommunications network 100, a plurality of different types of messages are typically to be transmitted, in many cases repeatedly, e.g. at least once during every predetermined time interval (such as status update messages or monitoring messages or the like). In case one of the endpoint network nodes 120 needs to repeatedly transmit such messages to one of the intermediate network nodes 110 (i.e. typically always to the same one of the intermediate network nodes 110), likewise the question occurs which one of the plurality of intermediate network nodes 110 to access. This is an example of a situation where a transmission path can be configured, within the respective endpoint network node, that defines which one of the plurality of intermediate network nodes 120 should be accessed in case a message of such a specific message type is to be transmitted. Especially for complex telecommunications networks 100, comprising many thousands of endpoint network nodes 120 and many intermediate network nodes 110, maintaining such configuration data up to date can be a cumbersome task requiring substantial efforts. According to the present invention, this effort can be greatly reduced by enabling the respective source endpoint network node (i.e. the endpoint network node among the plurality of endpoint network nodes 120 that needs to send a message or that needs a transmission path for messages of a certain type to be configured) to determine which one of the intermediate network nodes 110 to access in case that a certain message needs to be transmitted or a certain transmission path to be configured.

According to the present invention, basically two different situations should be considered:
-- In a first situation, a message is to be transmitted (or a transmission path to be configured) from a given endpoint network node (source endpoint network node) to another given endpoint network node (destination endpoint network node), involving at least one specific intermediate network node of the plurality of intermediate network nodes 110. This first situation is schematically represented in Figure 2.
-- In a second situation, a message is to be transmitted (or a transmission path to be configured) from a given endpoint network node (source endpoint network node) to one specific intermediate network node of the plurality of intermediate network nodes 110. This first situation is schematically represented in Figure 3.

Figure 2 schematically illustrates the first situation where a message is to be transmitted (or the transmission path configured) from a given endpoint network node (source endpoint network node) 121 to another given endpoint network node (destination endpoint network node) 122 (or alternatively to a further given endpoint network node (further destination endpoint network node)123), involving at least one specific intermediate network node 111 of the plurality of intermediate network nodes 110. In the exemplary configuration represented in Figure 2, the plurality of intermediate network nodes 110 comprises - besides the specific intermediate network node 111 (as a first intermediate network node 111) - a second intermediate network node 112, a third intermediate network node 113, a fourth intermediate network node 114, and a fifth intermediate network node 115. All these intermediate network nodes 111, 112, 113, 114, 115 are accessible (or available) to the source endpoint network node 121. The one specific intermediate network node 111 is chosen by the source endpoint network node 121 based on a determination of the respective distance between the destination endpoint network node 122 one the one hand, and the intermediate network nodes 111, 112, 113, 114, 115 on the other hand.

This case relates, e.g., to the situation when a configuration order has to be sent from the source endpoint network node 121 to the destination endpoint network node 122, wherein the sending system (i.e. the source endpoint network node 121) has to locate the closest configuration system (i.e. one of the plurality of intermediate network nodes 110) near the destination endpoint network node 122 that is able to process the configuration order. The sending endpoint (i.e. the source endpoint network node 121) can have a list of location information (such as, e.g., geographical coordinates) assigned to the plurality of intermediate network nodes 110, respectively, i.e. a first location information is assigned to the first intermediate network node 111, a second location information is assigned to the second intermediate network node 112, a third location information is assigned to the third intermediate network node 113, a fourth location information is assigned to the fourth intermediate network node 114, a fifth location information is assigned to the fifth intermediate network node 115. Knowing the location information (i.e. typically the geographical coordinates) of the destination endpoint network node 122, the source endpoint network node 121 can select the closest intermediate network node by means of, e.g., a distance calculation involving the respective location information. It might furthermore be the case that the destination of the message corresponds (not to the destination endpoint network node 122 but) to a further destination endpoint network node 123. This further destination endpoint network node 123 might be located in another country (i.e. involving another telecommunications network), or outside of the scope of the telecommunications network 100. In this latter case, the location information (typically geographic coordinate) of the further destination endpoint network node 123 can be used to find the appropriate gateway to the other telecommunications network.

Figure 3 schematically illustrates the second situation where a message is to be transmitted (or the transmission path configured) from a given endpoint network node (source endpoint network node) 121 to one specific intermediate network node 111 of the plurality of intermediate network nodes 110. In the exemplary configuration represented in Figure 3, the plurality of intermediate network nodes 110 comprises - besides the specific intermediate network node 111 (as a first intermediate network node 111) - a second intermediate network node 112, a third intermediate network node 113, a fourth intermediate network node 114, and a fifth intermediate network node 115. All these intermediate network nodes 111, 112, 113, 114, 115 are accessible (or available) to the source endpoint network node 121. The one specific intermediate network node 111 is chosen by the source endpoint network node 121 based on a determination of the respective distance between the source endpoint network node 121 one the one hand, and the intermediate network nodes 111, 112, 113, 114, 115 on the other hand.

This case relates, e.g., to the situation when multiple servers (or intermediate network nodes 111, 112, 113, 114, 115) might be used to collect alarms in a large system. Each alarm collecting server (i.e. each intermediate network node 111, 112, 113, 114, 115) has its own location information (i.e. typically geographical coordinates). Instead of having to preconfigure for each endpoint network node 121 the name of the alarm collecting server (i.e. the respective pre-configured intermediate network node 111, 112, 113, 114, 115) responsible for that endpoint network node 121, all endpoint network nodes receive a list of possible alarm collecting servers, and perform the computation of the closest server by using the location information, i.e. typically the geographical coordinates. Again, the sending endpoint (i.e. the source endpoint network node 121) typically has a list of location information (such as, e.g., geographical coordinates) assigned to the plurality of intermediate network nodes 110, respectively, i.e. a first location information is assigned to the first intermediate network node 111, a second location information is assigned to the second intermediate network node 112, a third location information is assigned to the third intermediate network node 113, a fourth location information is assigned to the fourth intermediate network node 114, a fifth location information is assigned to the fifth intermediate network node 115. Knowing the location information (i.e. typically the geographical coordinates) of the intermediate network nodes 110, the source endpoint network node 121 can select the closest intermediate network node by means of, e.g., a distance calculation involving the respective location information.

## Claims

1. Method for an enhanced routing of data in a telecommunications network (100) based on taking into consideration location information assigned to network nodes within the telecommunications network (100), the telecommunications network (100) being a distributed telecommunications network and comprising a plurality of intermediate network nodes (110) and a plurality of endpoint network nodes (120), wherein a location information is assigned to each one of the plurality of intermediate network nodes (110) and to each one of the plurality of endpoint network nodes (120), **characterized in that** the location information comprises geographical coordinates and each one of the plurality of intermediate network nodes (110) and each one of the plurality of endpoint network nodes (120) carries a node name that indicates the geographical coordinates of the respective node, wherein upon deploying a new intermediate network node the location information of the new intermediate network node is distributed to the endpoint network nodes through transmission of the name of the network node, wherein in view of transmitting a message from each endpoint network node (120) of the plurality of endpoint network nodes (120) to a closest intermediate network node (111) selected from a list of intermediate network nodes (110),
the method comprises the following steps:
-- in a first step, the list of intermediate network nodes (110) is transmitted to each endpoint network node (120) of the plurality of endpoint network nodes (120) and the closest intermediate network node (111) is determined, by the respective endpoint network node (120), among the intermediate network nodes (110) from the list of intermediate network nodes (110), wherein the closest intermediate network node (111) is selected from the list of intermediate network nodes (110) taking into consideration the respective geographical coordinates of the intermediate network nodes (110) from the list of intermediate network nodes (110), and the geographical coordinates of the respective endpoint network node (120),
-- in a second step, subsequent to the first step, the message is transmitted from each endpoint network node (120) to the closest intermediate network node (111), wherein the closest intermediate network node (111) is determined, by the respective endpoint network node (120), among the intermediate network nodes (110) from the list of intermediate network nodes (110) such that a calculated distance value - calculated based on using the node name indicating the geographical coordinates of the respective node - between the closest intermediate network node (111) on the one hand and the respective endpoint network node (120) on the other hand corresponds to a minimum among the plurality of intermediate network nodes (110) from the list of intermediate network nodes (110).

2. Method according to claim 1, wherein the respective location information of one of the plurality of endpoint network nodes (120) and/or of one of the plurality of intermediate network nodes (110) comprises at least one out of the following:
-- a longitude information and/or a latitude information and/or an elevation or height information,
-- geographical coordinates based on predefined reference points and distances thereto,
-- geographical coordinates based on a predefined reference point and a distance information and/or an angle information.

3. Method according to one of the preceding claims, wherein the method comprises a third step, prior to the first step, wherein in the third step, the location information - assigned to the plurality of intermediate network nodes (110) and to the plurality of endpoint network nodes (120) - is transmitted to the endpoint network node (120).

4. Method according claim 3, wherein the third step is repeated and an updated location information - assigned to the plurality of intermediate network nodes (110) and to the plurality of endpoint network nodes (120) after the telecommunications network (100) has been updated, involving adding and/or removing and/or modifying at least a part of the plurality of intermediate network nodes (110) and/or of at least a part of the plurality of endpoint network nodes (120) - is transmitted to the endpoint network node (120).

5. Telecommunications network (100) for an enhanced routing of data based on taking into consideration location information assigned to network nodes within the telecommunications network (100), the telecommunications network (100) being a distributed telecommunications network and comprising a plurality of intermediate network nodes (110) and a plurality of endpoint network nodes (120), wherein a location information is assigned to each one of the plurality of intermediate network nodes (110) and to each one of the plurality of endpoint network nodes (120), **characterized in that** the location information comprises geographical coordinates and each one of the plurality of intermediate network nodes (110) and each one of the plurality of endpoint network nodes (120) carries a node name that indicates the geographical coordinates of the respective node, wherein upon deploying a new intermediate network node the telecommunication network (100) is configured to distribute location information of the new intermediate network node to the endpoint network nodes through transmission of the name of the network node,
wherein in view of transmitting a message from each endpoint network node (120) of the plurality of endpoint network nodes (120) to a closest intermediate network node (111) selected from a list of intermediate network nodes (110),
the telecommunications network (100) is configured such that:
-- the list of intermediate network nodes (110) is transmitted to each endpoint network node (120) of the plurality of endpoint network nodes (120) and the closest intermediate network node (111) is determined, by the respective endpoint network node (120), among the intermediate network nodes (110) from the list of intermediate network nodes (110), wherein the closest intermediate network node (111) is selected from the list of intermediate network nodes (110) taking into consideration the respective geographical coordinates of the intermediate network nodes (110) from the list of intermediate network nodes (110), and the geographical coordinates of the respective endpoint network node (120),
-- the message is transmitted from each endpoint network node (120) to the closest intermediate network node (111),
wherein the closest intermediate network node (111) is determined, by the respective endpoint network node (120), among the intermediate network nodes (110) from the list of intermediate network nodes (110) such that a calculated distance value - calculated based on using the node name indicating the geographical coordinates of the respective node - between the closest intermediate network node (111) on the one hand and the respective endpoint network node (120) on the other hand corresponds to a minimum among the intermediate network nodes (110) from the list of intermediate network nodes (110).

6. Telecommunications network (100) according to claim 5, wherein the respective location information of one of the plurality of endpoint network nodes (120) and/or of one of the plurality of intermediate network nodes (110) comprises at least one out of the following:
-- a longitude information and/or a latitude information and/or an elevation or height information,
-- geographical coordinates based on predefined reference points and distances thereto,
-- geographical coordinates based on a predefined reference point and a distance information and/or an angle information.

7. Endpoint network node (120), adapted to be used in a telecommunications network (100) according to one of claims 5 or 6.

8. Program comprising a computer readable program code which, when executed on an endpoint network node (120) of a telecommunications network (100), causes the endpoint network node (120) of the telecommunications network (100) to perform a method according one of claims 1 to 4.

9. Computer program product for an enhanced routing of data in a telecommunications network (100) based on taking into consideration location information assigned to network nodes within the telecommunications network (100), the computer program product comprising a computer program stored on a storage medium, the computer program comprising program code which, when executed on an endpoint network node (120) of a telecommunications network (100), causes the endpoint network node (120) of the telecommunications network (100) to perform a method according one of claims 1 to 4.

## Patentansprüche

1. Verfahren für eine verbesserte Routung von Daten in einem Telekommunikationsnetz (100) auf der Grundlage der Berücksichtigung von Standortinformationen, die Netzknoten innerhalb des Telekommunikationsnetzes (100) zugewiesen sind, wobei das Telekommunikationsnetz (100) ein verteiltes Telekommunikationsnetz ist und mehrere Zwischennetzknoten (110) und mehrere Endpunktnetzknoten (120) umfasst, wobei jedem der mehreren Zwischennetzknoten (110) und jedem der mehreren Endpunktnetzknoten (120) eine Standortinformation zugewiesen ist,
**dadurch gekennzeichnet, dass** die Standortinformationen geografische Koordinaten umfassen und jeder der mehreren Zwischennetzknoten (110) und jeder der mehreren Endpunktnetzknoten (120) einen Knotennamen trägt, der die geografischen Koordinaten des jeweiligen Knotens angibt, wobei bei Verwendung eines neuen Zwischennetzknotens die Standortinformation des neuen Zwischennetzknotens durch Senden des Namens des Netzknotens an die Endpunktnetzknoten verteilt wird, wobei im Hinblick auf das Senden einer Nachricht von jedem Endpunktnetzknoten (120) der mehreren Endpunktnetzknoten (120) an einen nächstgelegenen Zwischennetzknoten (111), der aus einer Liste von Zwischennetzknoten (110) ausgewählt wird,
das Verfahren die folgenden Schritte umfasst:
- in einem ersten Schritt wird die Liste der Zwischennetzknoten (110) an jeden Endpunktnetzknoten (120) der mehreren Endpunktnetzknoten (120) gesendet, und der nächstgelegene Zwischennetzknoten (111) wird durch den jeweiligen Endpunktnetzknoten (120) unter den Zwischennetzknoten (110) aus der Liste der Zwischennetzknoten (110) bestimmt, wobei der nächstgelegene Zwischennetzknoten (111) aus der Liste der Zwischennetzknoten (110) unter Berücksichtigung der jeweiligen geographischen Koordinaten der Zwischennetzknoten (110) aus der Liste der Zwischennetzknoten (110) und der geographischen Koordinaten des jeweiligen Endpunktnetzknotens (120) ausgewählt wird,
- in einem zweiten Schritt, im Anschluss an den ersten Schritt, wird die Nachricht von jedem Endpunktnetzknoten (120) an den nächstgelegenen Zwischennetzknoten (111) gesendet, wobei der nächstgelegene Zwischennetzknoten (111) durch den jeweiligen Endpunktnetzknoten (120) unter den Zwischennetzknoten (110) aus der Liste der Zwischennetzknoten (110) so bestimmt wird, dass ein berechneter Entfernungswert - der auf der Grundlage der Verwendung des Knotennamens berechnet wird, der die geographischen Koordinaten des jeweiligen Knotens angibt - zwischen dem nächstgelegenen Zwischennetzknoten (111) einerseits und dem jeweiligen Endpunktnetzknoten (120) andererseits einem Minimum unter den mehreren Zwischennetzknoten (110) aus der Liste der Zwischennetzknoten (110) entspricht.

2. Verfahren nach Anspruch 1, wobei die jeweilige Standortinformation eines der mehreren Endpunktnetzknoten (120) und/oder eines der mehreren Zwischennetzknoten (110) mindestens eines von Folgendem umfasst:
- eine Längengradinformation und/oder eine Breitengradinformation und/oder eine Elevations- oder Höheninformation,
- geografische Koordinaten auf der Grundlage von zuvor festgelegten Referenzpunkten und Entfernungen zu diesen Referenzpunkten,
- geographische Koordinaten auf der Grundlage eines zuvor festgelegten Referenzpunktes und einer Entfernungsinformation und/oder einer Winkelinformation.

3. Verfahren nach einem der vorangehenden Ansprüche, wobei das Verfahren einen dritten Schritt, vor dem ersten Schritt, umfasst, wobei in dem dritten Schritt die Standortinformationen - die den mehreren Zwischennetzknoten (110) und den mehreren Endpunktnetzknoten (120) zugewiesen sind - an den Endpunktnetzknoten (120) gesendet werden.

4. Verfahren nach Anspruch 3, wobei der dritte Schritt wiederholt wird und eine aktualisierte Standortinformation - die den mehreren Zwischennetzknoten (110) und den mehreren Endpunktnetzknoten (120) zugewiesen wird, nachdem das Telekommunikationsnetz (100) aktualisiert wurde, was das Hinzufügen und/oder Entfernen und/oder Modifizieren von mindestens einem Teil der mehreren Zwischennetzknoten (110) und/oder von mindestens einem Teil der mehreren Endpunktnetzknoten (120) umfasst - an den Endpunktnetzknoten (120) gesendet wird.

5. Telekommunikationsnetz (100) für eine verbesserte Routung von Daten auf der Grundlage der Berücksichtigung von Standortinformationen, die Netzknoten innerhalb des Telekommunikationsnetzes (100) zugewiesen sind, wobei das Telekommunikationsnetz (100) ein verteiltes Telekommunikationsnetz ist und mehrere Zwischennetzknoten (110) und mehrere Endpunktnetzknoten (120) umfasst, wobei jedem der mehreren Zwischennetzknoten (110) und jedem der mehreren Endpunktnetzknoten (120) eine Standortinformation zugewiesen ist,
**dadurch gekennzeichnet, dass** die Standortinformationen geografische Koordinaten umfassen und jeder der mehreren Zwischennetzknoten (110) und jeder der mehreren Endpunktnetzknoten (120) einen Knotennamen trägt, der die geografischen Koordinaten des jeweiligen Knotens angibt, wobei das Telekommunikationsnetz (100) bei Verwendung eines neuen Zwischennetzknotens dafür ausgelegt ist, die Standortinformationen des neuen Zwischennetzknotens durch Senden des Namens des Netzknotens an die Endpunktnetzknoten zu verteilen,
wobei im Hinblick auf das Senden einer Nachricht von jedem Endpunktnetzknoten (120) der mehreren Endpunktnetzknoten (120) an einen nächstgelegenen Zwischennetzknoten (111), der aus einer Liste von Zwischennetzknoten (110) ausgewählt ist,
das Telekommunikationsnetz (100) so ausgelegt ist, dass:
- die Liste der Zwischennetzknoten (110) an jeden Endpunktnetzknoten (120) der mehreren Endpunktnetzknoten (120) gesendet wird und der nächstgelegene Zwischennetzknoten (111) durch den jeweiligen Endpunktnetzknoten (120) unter den Zwischennetzknoten (110) aus der Liste der Zwischennetzknoten (110) bestimmt wird, wobei der nächstgelegene Zwischennetzknoten (111) aus der Liste der Zwischennetzknoten (110) unter Berücksichtigung der jeweiligen geographischen Koordinaten der Zwischennetzknoten (110) aus der Liste der Zwischennetzknoten (110) und der geographischen Koordinaten des jeweiligen Endpunktnetzknotens (120) ausgewählt wird,
- die Nachricht von jedem Endpunktnetzknoten (120) an den nächstgelegenen Zwischennetzknoten (111) gesendet wird,
wobei der nächstgelegene Zwischennetzknoten (111) durch den jeweiligen Endpunktnetzknoten (120) unter den Zwischennetzknoten (110) aus der Liste der Zwischennetzknoten (110) so bestimmt wird, dass ein berechneter Entfernungswert - der auf der Grundlage der Verwendung des Knotennamens berechnet wird, der die geographischen Koordinaten des jeweiligen Knotens angibt - zwischen dem nächstgelegenen Zwischennetzknoten (111) einerseits und dem jeweiligen Endpunktnetzknoten (120) andererseits einem Minimum unter den Zwischennetzknoten (110) aus der Liste der Zwischennetzknoten (110) entspricht.

6. Telekommunikationsnetz (100) nach Anspruch 5, wobei die jeweilige Standortinformation eines der mehreren Endpunktnetzknoten (120) und/oder eines der mehreren Zwischennetzknoten (110) mindestens eines von Folgendem umfasst:
- eine Längengradinformation und/oder eine Breitengradinformation und/oder eine Elevations- oder Höheninformation,
- geografische Koordinaten auf der Grundlage von zuvor festgelegten Referenzpunkten und Entfernungen zu diesen Referenzpunkten,
- geographische Koordinaten auf der Grundlage eines zuvor festgelegten Referenzpunktes und einer Entfernungsinformation und/oder einer Winkelinformation.

7. Endpunktnetzknoten (120), dafür eingerichtet, in einem Telekommunikationsnetz (100) nach einem der Ansprüche 5 oder 6 verwendet zu werden.

8. Programm, umfassend einen computerlesbaren Programmcode, der, wenn er in einem Endpunktnetzknoten (120) eines Telekommunikationsnetzes (100) ausgeführt wird, den Endpunktnetzknoten (120) des Telekommunikationsnetzes (100) veranlasst, ein Verfahren nach einem der Ansprüche 1 bis 4 durchzuführen.

9. Computerprogrammprodukt für eine verbesserte Routung von Daten in einem Telekommunikationsnetz (100) auf der Grundlage der Berücksichtigung von Standortinformationen, die Netzknoten innerhalb des Telekommunikationsnetzes (100) zugewiesen sind, wobei das Computerprogrammprodukt ein auf einem Speichermedium gespeichertes Computerprogramm umfasst, wobei das Computerprogramm Programmcode umfasst, der, wenn er in einem Endpunktnetzknoten (120) eines Telekommunikationsnetzes (100) ausgeführt wird, den Endpunktnetzknoten (120) des Telekommunikationsnetzes (100) veranlasst, ein Verfahren nach einem der Ansprüche 1 bis 4 durchzuführen.

## Revendications

1. Procédé pour un routage amélioré de données dans un réseau de télécommunications (100) basé sur la prise en compte d'informations de localisation attribuées à des noeuds de réseau au sein du réseau de télécommunications (100), le réseau de télécommunications (100) étant un réseau de télécommunications distribué et comprenant une pluralité de noeuds de réseau intermédiaires (110) et une pluralité de noeuds de réseau d'extrémité (120), dans lequel une information de localisation est attribuée à chaque noeud de la pluralité de noeuds de réseau intermédiaires (110) et à chaque noeud de la pluralité de noeuds de réseau d'extrémité (120),
**caractérisé en ce que** les informations de localisation comprennent des coordonnées géographiques et chaque noeud de la pluralité de noeuds de réseau intermédiaires (110) et chaque noeud de la pluralité de noeuds de réseau d'extrémité (120) porte un nom de noeud qui indique les coordonnées géographiques du noeud respectif, dans lequel lors du déploiement d'un nouveau noeud de réseau intermédiaire, les informations de localisation du nouveau noeud de réseau intermédiaire sont distribuées aux noeuds de réseau d'extrémité par transmission du nom du noeud de réseau, dans lequel pour ce qui concerne la transmission d'un message à partir de chaque noeud de réseau d'extrémité (120) de la pluralité de noeuds de réseau d'extrémité (120) au noeud de réseau intermédiaire le plus proche (111) choisi parmi une liste de noeuds de réseau intermédiaires (110),
le procédé comprend les étapes suivantes :
- dans une première étape, la liste de noeuds de réseau intermédiaires (110) est transmise à chaque noeud de réseau d'extrémité (120) de la pluralité de noeuds de réseau d'extrémité (120) et le noeud de réseau intermédiaire le plus proche (111) est déterminé, par le noeud de réseau d'extrémité (120) respectif, parmi les noeuds de réseau intermédiaires (110) de la liste de noeuds de réseau intermédiaires (110), dans lequel le noeud de réseau intermédiaire le plus proche (111) est choisi parmi la liste de noeuds de réseau intermédiaires (110) en tenant compte des coordonnés géographiques respectives des noeuds de réseau intermédiaires (110) de la liste de noeuds de réseau intermédiaires (110), et des coordonnées géographiques du noeud de réseau d'extrémité (120) respectif,
- dans une deuxième étape, suivant la première étape, le message est transmis à partir de chaque noeud de réseau d'extrémité (120) au noeud de réseau intermédiaire le plus proche (111), dans lequel le noeud de réseau intermédiaire le plus proche (111) est déterminé, par le noeud de réseau d'extrémité (120) respectif, parmi les noeuds de réseau intermédiaires (110) de la liste de noeuds de réseau intermédiaires (110) de telle sorte qu'une valeur de distance calculée - calculée sur la base de l'utilisation du nom de noeud indiquant les coordonnées géographiques du noeud respectif - entre le noeud de réseau intermédiaire le plus proche (111) d'une part et le noeud de réseau d'extrémité (120) respectif d'autre part correspond à un minimum parmi la pluralité de noeuds de réseau intermédiaires (110) de la liste de noeuds de réseau intermédiaires (110).

2. Procédé selon la revendication 1, dans lequel les informations de localisation respectives d'un noeud de la pluralité de noeuds de réseau d'extrémité (120) et/ou d'un noeud de la pluralité de noeuds de réseau intermédiaires (110) comprennent au moins une parmi les suivantes :
- une information de longitude et/ou une information de latitude et/ou une information d'altitude ou de hauteur,
- des coordonnées géographiques basées sur des points de référence prédéfinis et des distances par rapport à ceux-ci,
- des coordonnées géographiques basées sur un point de référence prédéfini et une information de distance et/ou une information d'angle.

3. Procédé selon l'une des revendications précédentes, dans lequel le procédé comprend une troisième étape, avant la première étape, dans lequel dans la troisième étape, les informations de localisation -attribuées à la pluralité de noeuds de réseau intermédiaires (110) et à la pluralité de noeuds de réseau d'extrémité (120) - sont transmises au noeud de réseau d'extrémité (120).

4. Procédé selon la revendication 3, dans lequel la troisième étape est répétée et une information de localisation mise à jour - attribuée à la pluralité de noeuds de réseau intermédiaires (110) et à la pluralité de noeuds de réseau d'extrémité (120) après que le réseau de télécommunications (100) a été mis à jour, impliquant l'ajout et/ou la suppression et/ou la modification d'au moins une partie de la pluralité de noeuds de réseau intermédiaires (110) et/ou d'au moins une partie de la pluralité de noeuds de réseau d'extrémité (120) - est transmise au noeud de réseau d'extrémité (120).

5. Réseau de télécommunications (100) pour un routage amélioré de données basé sur la prise en compte d'informations de localisation attribuées à des noeuds de réseau au sein du réseau de télécommunications (100), le réseau de télécommunications (100) étant un réseau de télécommunications distribué et comprenant une pluralité de noeuds de réseau intermédiaires (110) et une pluralité de noeuds de réseau d'extrémité (120), dans lequel une information de localisation est attribuée à chaque noeud de la pluralité de noeuds de réseau intermédiaires (110) et à chaque noeud de la pluralité de noeuds de réseau d'extrémité (120),
**caractérisé en ce que** les informations de localisation comprennent des coordonnés géographiques et chaque noeud de la pluralité de noeuds de réseau intermédiaires (110) et chaque noeud de la pluralité de noeuds de réseau d'extrémité (120) porte un nom de noeud qui indique les coordonnées géographiques du noeud respectif, dans lequel lors du déploiement d'un nouveau noeud de réseau intermédiaire, le réseau de télécommunications (100) est configuré pour distribuer des informations de localisation du nouveau noeud de réseau intermédiaire aux noeuds de réseau d'extrémité par transmission du nom du noeud de réseau,
dans lequel pour ce qui concerne la transmission d'un message à partir de chaque noeud de réseau d'extrémité (120) de la pluralité de noeuds de réseau d'extrémité (120) à un noeud de réseau intermédiaire le plus proche (111) choisi parmi une liste de noeuds de réseau intermédiaires (110), le noeud de réseau de télécommunications (110) est configuré de telle sorte que :
- la liste de noeuds de réseau intermédiaires (110) est transmise à chaque noeud de réseau d'extrémité (120) de la pluralité de noeuds de réseau d'extrémité (120) et le noeud de réseau intermédiaire le plus proche (111) est déterminé, par le noeud de réseau d'extrémité (120) respectif, parmi les noeuds de réseau intermédiaires (110) de la liste de noeuds de réseau intermédiaires (110), dans lequel le noeud de réseau intermédiaire le plus proche (111) est choisi parmi la liste de noeuds de réseau intermédiaires (110) en tenant compte des coordonnés géographiques respectives des noeuds de réseau intermédiaires (110) de la liste de noeuds de réseau intermédiaires (110), et des coordonnées géographiques du noeud de réseau d'extrémité (120) respectif,
- le message est transmis à partir de chaque noeud de réseau d'extrémité (120) au noeud de réseau intermédiaire le plus proche (111),
dans lequel le noeud de réseau intermédiaire le plus proche (111) est déterminé, par le noeud de réseau d'extrémité (120) respectif, parmi les noeuds de réseau intermédiaires (110) de la liste de noeuds de réseau intermédiaires (110) de telle sorte qu'une valeur de distance calculée - calculée sur la base de l'utilisation du nom de noeud indiquant les coordonnées géographiques du noeud respectif - entre le noeud de réseau intermédiaire le plus proche (111) d'une part et le noeud de réseau d'extrémité (120) respectif d'autre part correspond à un minimum parmi les noeuds de réseau intermédiaires (110) de la liste de noeuds de réseau intermédiaires (110).

6. Réseau de télécommunications (100) selon la revendication 5, dans lequel les informations de localisation respectives d'un noeud de la pluralité de noeuds de réseau d'extrémité (120) et/ou d'un noeud de la pluralité de noeuds de réseau intermédiaires (110) comprennent au moins une parmi les suivantes :
- une information de longitude et/ou une information de latitude et/ou une information d'altitude ou de hauteur,
- des coordonnées géographiques basées sur des points de référence prédéfinis et des distances par rapport à ceux-ci,
- des coordonnées géographiques basées sur un point de référence prédéfini et une information de distance et/ou une information d'angle.

7. Noeud de réseau d'extrémité (120), adapté pour être utilisé dans un réseau de télécommunications (100) selon l'une des revendications 5 ou 6.

8. Programme comprenant un code de programme lisible par ordinateur qui, lorsqu'il est exécuté sur un noeud de réseau d'extrémité (120) d'un réseau de télécommunications (100), amène le noeud de réseau d'extrémité (120) du réseau de télécommunications (100) à mettre en œuvre un procédé selon l'une des revendications 1 à 4.

9. Produit de programme informatique pour un routage amélioré de données dans un réseau de télécommunications (100) basé sur la prise en compte d'informations de localisation attribuées à des noeuds de réseau au sein du réseau de télécommunications (100), le produit de programme informatique comprenant un programme informatique stocké sur un support de stockage, le programme informatique comprenant un code de programme qui, lorsqu'il est exécuté sur un noeud de réseau d'extrémité (120) d'un réseau de télécommunications (100), amène le noeud de réseau d'extrémité (120) du réseau de télécommunications (100) à mettre en œuvre un procédé selon l'une des revendications 1 à 4.
